# EUROPÄISCHE PATENTSCHRIFT

(11) **EP 3 106 242 B1**
(45) Veröffentlichungstag und Bekanntmachung des Hinweises auf die Patenterteilung: **08.01.2020**
(21) Anmeldenummer: 16174765.4
(22) Anmeldetag: 16.06.2016
(51) Int. Cl.: B21D 39/04

(54) **FERTIGUNGSANLAGE ZUM VERPRESSEN VON LEITUNGEN**
PRODUCTION ASSEMBLY FOR CONNECTING PIPES
INSTALLATION DE FABRICATION DESTINEE AU SERRAGE DE CONDUITES

(30) Priorität: 18.06.2015 AT 505132015
(43) Veröffentlichungstag der Anmeldung: 21.12.2016
(73) Patentinhaber: Henn GmbH & Co KG., 6850 Dornbirn (AT)
(72) Erfinder: MOOSBRUGGER, Christian, 6870 Bezau (AT)
(74) Vertreter: Burger, Hannes

(56) Entgegenhaltungen:
- EP-A1- 2 364 790
- EP-A1- 2 586 542
- DE-A1- 19 925 504
- US-A1- 2013 160 284

## Beschreibung

Die Erfindung betrifft eine Fertigungsanlage zum Verbinden einer Leitung für flüssige oder gasförmige Medien mit einem Steckverbinder, sowie ein Verfahren zum Herstellen einer derartigen Verbindung.

Eine Verpressung eines Steckverbinders mit einem Endabschnitt einer Leitung, bei welcher die Presskraft in Abhängigkeit vom Weg auf unterschiedliche Werte geregelt wird, auch wegabhängige Kraftregelung genannt, geht aus der EP 1 762 312 A1 hervor. Der Endabschnitt der Leitung wird in einen Ringraum zwischen dem inneren hülsenförmigen ersten Wandabschnitt und dem äußeren hülsenförmigen zweiten Wandabschnitt eingesteckt, worauf mit einem Spreizwerkzeug der erste Wandabschnitt von innen her in Richtung zum äußeren Wandabschnitt gegen den im Ringraum zwischen den beiden Wandabschnitten eingesteckten Endabschnitt der Leitung eingedrückt wird. Dabei wird eine ringförmig umlaufende Pressnut im ersten Wandabschnitt ausgebildet. Um sicherzustellen, dass ein ausreichender Verpressgrad bzw. eine ausreichende Verpressung erreicht wird, ist vorgesehen, dass die Verpresskraft überwacht wird, wobei ein Sollwert der Verpresskraft vorgegeben ist und die aktuell aufgebrachte Verpresskraft mit diesem Sollwert verglichen wird.

Aus der EP 2 364 790 B1 ist eine weitere Pressmaschine bzw. ein Pressverfahren zum Verpressen eines Steckverbinders bekannt.

Aus der EP 2 586 542 A1 und der US 2013/0160284 A1 sind weitere Pressmaschinen bekannt.

Die aus der EP 1 762 312 A1 und der EP 2 364 790 B1 bekannten Pressvorrichtungen weisen den Nachteil auf, dass die exakte Geometrie des zu verpressenden Schlauches bzw. Rohres nur bedingt vermessen werden kann, sodass eine Einhaltung der Fertigungstoleranzen des Schlauches bzw. Rohres nur bedingt kontrolliert werden kann.

Der vorliegenden Erfindung liegt die Aufgabe zugrunde eine Messeinrichtung zur Kontrolle der Geometrie eines hohlzylindrischen Objektes zu schaffen, bzw. ein geeignetes Messverfahren anzugeben.

Diese Aufgabe der Erfindung wird durch die Merkmale gemäß Anspruch 1 bzw. durch die Maßnahmen gemäß Anspruch 10 gelöst.

Erfindungsgemäß ist eine Fertigungsanlage zum Verbinden einer Leitung für flüssige oder gasförmige Medien mit einem Steckverbinder vorgesehen. Die Fertigungsanlage umfasst eine Messvorrichtung zum Messen der Geometrie der zu verbindenden Leitung, wobei an der Messvorrichtung eine Markiervorrichtung zum Markieren der vermessenen Leitung ausgebildet ist. Weiters umfasst die Fertigungsanlage eine Pressmaschine zum Verpressen des Steckverbinders mit der vermessenen Leitung, wobei an der Pressmaschine ein Erfassungsmittel zur Erfassung einer an der Leitung angebrachten Markierung ausgebildet ist.

Von Vorteil an der erfindungsgemäßen Ausbildung der Fertigungsanlage ist, dass die zu verpressende Leitung vor dem Verpressen mit dem Steckverbinder vermessen werden kann und somit sichergestellt werden kann, dass nur Leitungen, welche eine ausreichende Herstellgenauigkeit aufweisen und daher innerhalb der Toleranzgrenzen liegen, mit Steckverbindern verpresst werden.

Weiters kann es zweckmäßig sein, dass die Markiervorrichtung der Messvorrichtung zumindest eine Farbdüse zum Aufbringen eines Farbmittels auf eine Außenwandfläche der Leitung umfasst. Von Vorteil ist hierbei, dass durch eine derartige Ausgestaltung der Markiervorrichtung die Leitung einfach markiert werden kann. Insbesondere ist es dadurch auch möglich, dass verschiedene Typen von Leitungen mit verschiedenen Formen durch die Markiervorrichtung markiert werden, ohne dass dabei die Markiervorrichtung umgerüstet werden muss.

Ferner kann vorgesehen sein, dass die Markiervorrichtung fünf nebeneinander angeordnete Farbdüsen zum Aufbringen eines Farbmittels auf eine Außenwandfläche der Leitung umfasst. Von Vorteil ist hierbei, dass durch die fünf Farbdüsen verschiedene Markierzustände auf die Leitung angebracht werden können und somit eine eindeutige Zuordnung von Leitungen ermöglicht wird.

Darüber hinaus kann vorgesehen sein, dass ein Farbspeicher in Form eines Behältnisses ausgebildet ist, welcher Farbspeicher mit Druckluft beaufschlagbar ist und dass je Farbdüse ein Ventil, insbesondere ein Magnetventil angeordnet ist. Von Vorteil ist hierbei, dass durch das Ventil die Farbdüse aktivierbar ist und das Farbmittel auf die Leitung aufbringbar ist.

Vorteilhaft ist auch eine Ausprägung, gemäß welcher vorgesehen sein kann, dass das Erfassungsmittel der Pressmaschine als optisches Erfassungsmittel, insbesondere als Kamerasystem ausgebildet ist.

Gemäß einer Weiterbildung ist es möglich, dass an der Pressmaschine eine Lichtquelle angeordnet ist, welche zum Abstrahlen von ultraviolettem Licht ausgebildet ist. Von Vorteil ist hierbei, dass zur Markierung der Leitung ein Farbstoff verwendet werden kann, welcher unter Tageslicht nicht sichtbar ist und somit bei normalen Lichtverhältnissen keine störende Markierung auf der Leitung sichtbar ist.

Ferner kann es zweckmäßig sein, dass ein optisches Anzeigemittel, beispielsweise ein Bildschirm, ausgebildet ist, welcher mit der Messvorrichtung und/oder mit der Pressmaschine verbunden ist. Von Vorteil ist hierbei, dass aktuelle Informationen zur Pressmaschine oder zur Messvorrichtung angezeigt und dem Benutzer bereitgestellt werden können.

Darüber hinaus kann vorgesehen sein, dass die Messvorrichtung mit der Pressmaschine mittels einer Datenleitung verbunden ist. Von Vorteil ist hierbei, dass dadurch Daten, insbesondere Geometriedaten der Leitung von der Messvorrichtung auf die Pressmaschine übertragen werden können.

Weiters kann vorgesehen sein, dass die Messvorrichtung und die Pressmaschine durch eine gemeinsame Rechnereinheit, etwa einem Industriecomputer, angesteuert werden. Von Vorteil ist hierbei, dass die Fertigungsanlage möglichst einfach aufgebaut werden kann, da nur eine Rechnereinheit benötigt wird.

Beim Verfahren zum Verbinden einer Leitung für flüssige oder gasförmige Medien mit einem Steckverbinder, insbesondere unter Verwendung einer Fertigungsanlage nach einem der vorhergehenden Ansprüche ist vorgesehen, dass das Verfahren folgende Verfahrensschritte umfasst:
- Vermessen der Geometrie der zu verbindenden Leitung an einer Messvorrichtung;
- Markieren der zu verbindenden Leitung mittels einer Markiervorrichtung, wenn die Geometrie der zu verbindenden Leitung innerhalb vorgegebener Toleranzgrenzen liegt;
- Einlegen des Steckverbinders in eine Pressmaschine;
- Einstecken der Leitung in einen im Steckverbinder ausgebildeten Ringraum;
- Überprüfen ob die eingelegte Leitung vermessen und als Gutteil markiert wurde mittels einem Erfassungsmittel, welches an der Pressmaschine angeordnet ist;
- Verpressen des Steckverbinders mit der Leitung, wenn die Leitung als Gutteil identifiziert wurde;
- Freigeben des mit der Leitung verpressten Steckverbinders.

Von Vorteil an diesem Verfahren ist, dass die Qualität der Verbindung zwischen Leitung und Steckverbinder verbessert werden kann.

Die Manipulation der Einzelteile zwischen den einzelnen Verfahrensschritten kann durch einen Maschinenbediener erfolgen. Alternativ dazu ist es auch denkbar, dass die Manipulation automatisiert oder teilautomatisiert erfolgt.

Entsprechend einer vorteilhaften Weiterbildung kann vorgesehen sein, dass durch die Markiervorrichtung zumindest ein Farbpunkt auf eine Außenwandfläche der Leitung aufgebracht wird und dass von dem Erfassungsmittel erfasst wird, ob der Farbpunkt auf der Leitung vorhanden ist. Dadurch kann erreicht werden, dass nur Leitungen verpresst werden, welche zuvor auch vermessen wurden und welche innerhalb der vorgegebenen Toleranzgrenzen liegen.

Insbesondere kann es vorteilhaft sein, dass durch die Markiervorrichtung ein Muster von Farbpunkten auf die Außenwandfläche der Leitung aufgebracht wird und dass von der Pressmaschine mittels dem Erfassungsmittel das Muster von Farbpunkten abgelesen wird, wobei ermittelt wird, ob die zuletzt vermessene Leitung in die Pressmaschine eingelegt ist. Dadurch kann eindeutig festgestellt werden, ob auch die zuletzt vermessene Leitung in die Pressmaschine eingelegt ist.

Gemäß einer besonderen Ausprägung ist es möglich, dass die von der Messvorrichtung erfassten Geometriedaten der Leitung an die Pressmaschine übertragen werden und der Pressvorgang in Abhängigkeit von den erfassten Geometriedaten der Leitung durchgeführt wird. Von Vorteil ist hierbei, dass die Qualität der Verbindung zwischen Leitung und Steckverbinder weiter erhöht werden kann bzw. dass die Toleranzgrenzen erweitert werden können, sodass eine geringere Anzahl von Leitungen als Ausschuss weggeworfen werden muss.

Ferner kann es zweckmäßig sein, dass in der Messvorrichtung eine Wandstärke der Leitung erfasst wird. Von Vorteil ist hierbei, dass die Wandstärke der Leitung in die Pressparameter einfließen kann, wobei dadurch die Dichtwirkung zwischen Leitung und Steckverbinder verbessert werden kann.

Darüber hinaus kann vorgesehen sein, dass die in der Messvorrichtung ermittelten Messwerte der Leitung mit einem vorgegebenen bzw. vorgebbaren Toleranzbereich abgeglichen werden und dass bei Überschreiten der Toleranzgrenzen dies dem Benutzer signalisiert wird und die Leitung ohne markiert zu werden von der Messvorrichtung zur Herausnahme freigegeben wird. Von Vorteil ist hierbei, dass Leitungen, welche außerhalb der Toleranzgrenzen liegen, dadurch vom Benutzer ausgeschieden werden können und somit sichergestellt werden kann, dass diese fehlerhaften Leitungen nicht verpresst werden.

Schließlich kann vorgesehen sein, dass eine Abstandsmesseinrichtung durch eine im zweiten Mantelabschnitt angeordnete Fensteröffnung hindurch die der Fensteröffnung zugewandte Außenwandfläche der Leitung erfasst. Von Vorteil ist hierbei, dass dadurch erkannt werden kann, ob die Leitung korrekt in den Steckverbinder eingelegt wurde.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Steckerbaugruppe in einem Viertelschnitt;
- Fig. 2: ein mit der Steckerbaugruppe ausgestattetes Fahrzeug;
- Fig. 3: eine Schnittdarstellung eines ersten Ausführungsbeispiels der Steckerbaugruppe in einer Explosionsansicht;
- Fig. 4: eine Schnittdarstellung eines weiteren Ausführungsbeispiels der Steckerbaugruppe in einer Explosionsansicht;
- Fig. 5: eine Schnittdarstellung der Steckerbaugruppe mit Verpresswerkzeug;
- Fig. 6: eine perspektivische Ansicht der Steckerbaugruppe mit Verpresswerkzeug;
- Fig. 7: eine Ansicht von vorne auf eine Messvorrichtung;
- Fig. 8: eine perspektivische Ansicht von links unten auf die Messvorrichtung;
- Fig. 9: eine perspektivische Ansicht einer Fertigungsanlage mit Messvorrichtung und Verpressvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

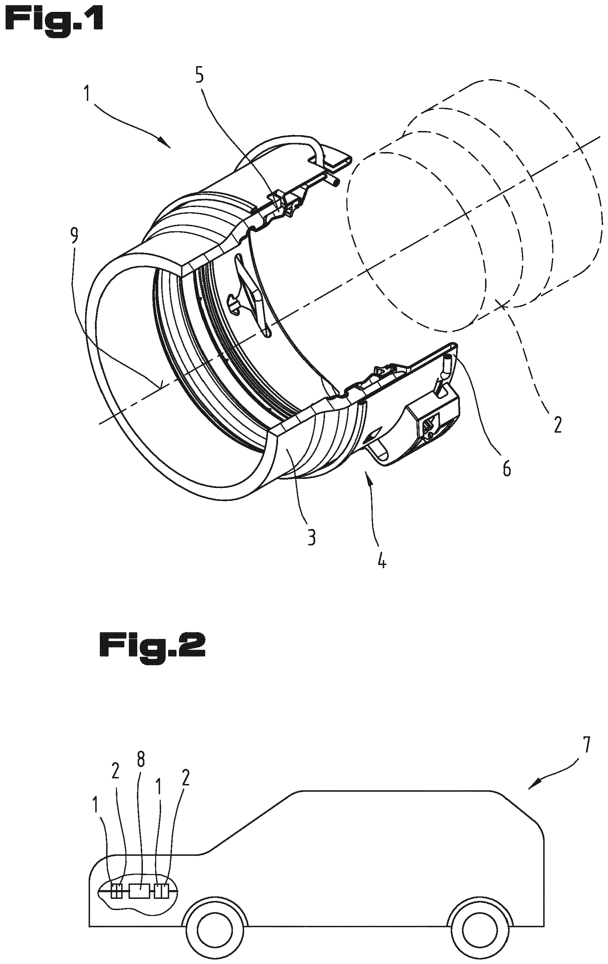

Fig. 1 zeigt eine perspektivische Ansicht einer Steckerbaugruppe 1, wobei diese in einem Viertelschnitt geschnitten dargestellt ist. Weiters ist in Fig. 1 schematisch ein Gegensteckverbinder 2 dargestellt, welcher mit der Steckerbaugruppe 1 verbindbar ist. Das Zusammenwirken zwischen Steckerbaugruppe 1 und einem Gegensteckverbinder 2 ist in der AT 509 196 B1 hinlänglich beschrieben.

In Fig. 1 ist die Steckerbaugruppe 1 in einem zusammengebauten Zustand dargestellt. Die Steckerbaugruppe 1 umfasst eine Leitung 3 auch als Rohr bezeichnet. Die Leitung 3 kann durch einen mehr oder weniger flexiblen Schlauch oder durch ein im Wesentlichen starres Rohrelement gebildet sein und zur Führung von flüssigen oder gasförmigen Medien dienen. Weiters umfasst die Steckerbaugruppe 1 einen Steckverbinder 4 und gegebenenfalls ein zwischen Steckverbinder 4 und Leitung 3 eingebrachtes Dichtungselement 5. Das Dichtungselement 5 ist insbesondere notwendig, wenn die Leitung 3 aus einem harten Kunststoffmaterial besteht, welches nur geringfügig verformbar ist.

Der Steckverbinder 4 umfasst einen Verbinderkörper 6, welcher vorzugsweise als einteiliges Umformteil, etwa als Tiefziehteil, insbesondere aus einem Edelstahlblech gebildet sein kann.

Fig. 2 zeigt eine schematische Darstellung eines Fahrzeuges 7 mit verbauter Steckerbaugruppe 1 entsprechend Fig. 1. Wie in Fig. 2 ersichtlich, wird die Steckerbaugruppe 1 vorzugsweise in einem Fahrzeug 7, insbesondere in einem straßengebundenen Kraftfahrzeug mit Verbrennungsmotor eingesetzt. Im Speziellen wird die Steckerbaugruppe 1 zum Verbinden verschiedener Bauteile der Frischluftzuführung zum Verbrennungsmotor eingesetzt. Beispielsweise kann vorgesehen sein, dass die Steckerbaugruppe 1 mit dem entsprechenden Gegensteckverbinder 2 zur Verbindung zweier Teile im Ansaugbereich eines Turboladers 8 vorgesehen ist. Weiters kann auch vorgesehen sein, dass eine derartige Steckerverbindung in der vom Turbolader 8 abgehenden Druckseite zur Verbindung zweier Bauteile eingesetzt wird.

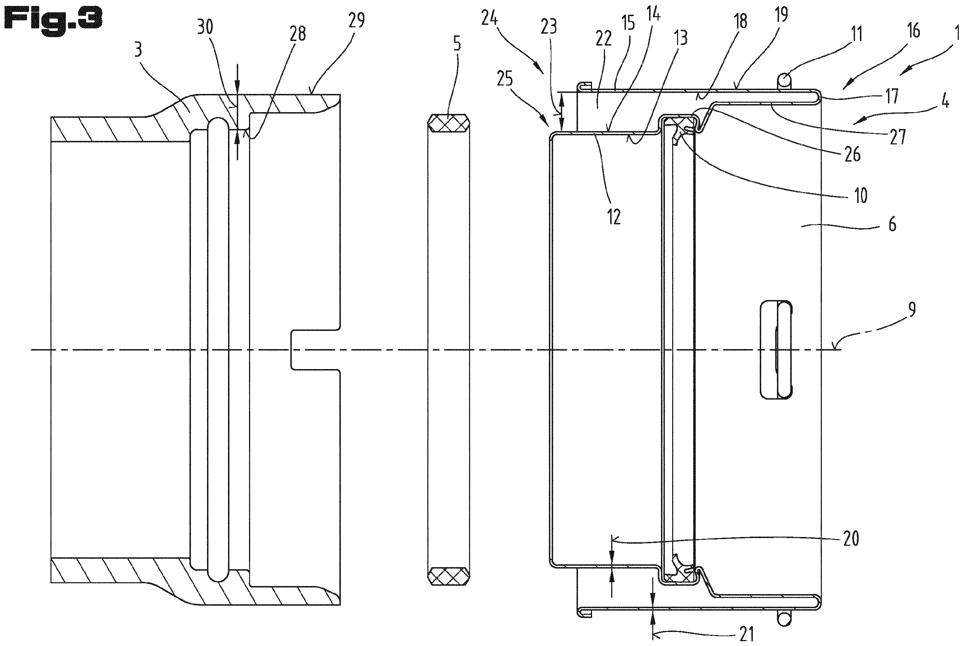

Fig. 3 zeigt einen Schnitt durch ein erstes Ausführungsbeispiel der Steckerbaugruppe 1 entlang einer zentralen Längsachse 9 des Steckverbinders 4. In diesem Ausführungsbeispiel ist die Leitung 3 als starres Rohr ausgebildet, welches nicht oder nur geringfügig verformbar ist. Bei einem derartigen starren Rohr kann es notwendig sein, dass auch ein Dichtungselement 5 verbaut wird.

Um die einzelnen Bauteile gut beschreiben zu können, sind diese in der Fig. 3 in einer Explosionsansicht dargestellt.

Wie in Fig. 3 gut ersichtlich, kann vorgesehen sein, dass der Steckverbinder 4 neben dem Verbinderkörper 6 eine Steckerdichtung 10, welche im Verbinderkörper 6 aufgenommen ist, umfasst. Die Steckerdichtung 10 dient dazu, um die Steckerbaugruppe 1 im zusammengesteckten Zustand mit einem Gegensteckverbinder 2 ausreichend abdichten zu können. Weiters kann der Steckverbinder 4 ein Federelement 11 umfassen, durch welches die Steckerbaugruppe 1 in deren Position relativ zum, mit der Steckerbaugruppe 1 zusammengesteckten, Gegensteckverbinder 2 gesichert werden kann. Das Federelement 11 ist dermaßen konstruiert, dass es leicht aktiviert und deaktiviert werden kann, sodass bedarfsweise die Steckerbaugruppe 1 und der Gegensteckverbinder 2 voneinander getrennt bzw. miteinander verbunden werden können.

Wie in Fig. 3 ersichtlich, ist am Verbinderkörper 6 ein erster Mantelabschnitt 12 ausgebildet, welcher die zentrale Längsachse 9 des Steckverbinders 4 hülsenförmig umgibt. Mit anderen Worten ausgedrückt, ist der erste Mantelabschnitt 12 ein rotationssymmetrischer Hohlzylinder.

Der erste Mantelabschnitt 12 weist eine innenliegende Mantelfläche 13 und eine außenliegende Mantelfläche 14 auf. Den ersten Mantelabschnitt 12 umgibt ein zweiter Mantelabschnitt 15, welcher ebenfalls bezüglich der zentralen Längsachse 9 rotationssymmetrisch ausgebildet ist. Der erste Mantelabschnitt 12 ist mit dem zweiten Mantelabschnitt 15 an einem ersten Endabschnitt 16 mittels eines ersten Stirnwandabschnittes 17 verbunden.

Gleich wie der erste Mantelabschnitt 12 weist auch der zweite Mantelabschnitt 15 eine innenliegende Mantelfläche 18 und eine außenliegende Mantelfläche 19 auf.

Der erste Mantelabschnitt 12 wird durch seine innenliegende Mantelfläche 13 und die außenliegende Mantelfläche 14 begrenzt, wodurch sich eine Wandstärke 20 des ersten Mantelabschnittes 12 ergibt. Der zweite Mantelabschnitt 15 wird ebenfalls durch eine innenliegende Mantelfläche 18 und eine außenliegende Mantelfläche 19 begrenzt, wodurch sich eine Wandstärke 21 des zweiten Mantelabschnittes 15 ergibt.

Durch die Beabstandung der beiden Mantelabschnitte 12, 15 zueinander, ergibt sich ein Ringraum 22. Der Ringraum 22 wird insbesondere in radialer Richtung durch die außenliegende Mantelfläche 14 des ersten Mantelabschnittes 12 und durch die innenliegende Mantelfläche 18 des zweiten Mantelabschnittes 15 begrenzt. Insbesondere ergibt sich dadurch ein Ringraumspalt 23. Dieser Ringraumspalt 23 ist vorzugsweise so groß gewählt, dass die Leitung 3 zumindest teilweise darin aufgenommen werden kann. Im dargestellten Ausführungsbeispiel ist der Ringraumspalt 23 zwischen 2mm und 20mm, insbesondere, zwischen 3mm und 10mm, bevorzugt zwischen 5mm und 7mm groß.

Die beiden Mantelabschnitte 12, 15 sind an einem zweiten Endabschnitt 24 des Steckverbinders 4 offen zueinander, wodurch sich eine Rohraufhahmeseite 25 des Verbinderkörpers 6 ergibt.

Weiters kann vorgesehen sein, dass an dem ersten Mantelabschnitt 12 in Richtung ersten Endabschnitt 16 des Steckverbinders 4 betrachtet, eine Dichtungsaufnahme 26 anschließt, welche ebenfalls im Verbinderkörper 6 ausgeformt ist. In einer derartigen Dichtungsaufnahme 26 kann die Steckerdichtung 10 aufgenommen sein. Weiters kann vorgesehen sein, dass an die Dichtungsaufnahme 26 ein dritter Mantelabschnitt 27 anschließt, welcher zur Aufnahme des Gegensteckverbinders 2 dient. An den dritten Mantelabschnitt 27 kann der Stirnwandabschnitt 17 anschließen, welcher den dritten Mantelabschnitt 27 mit dem zweiten Mantelabschnitt 15 verbindet. Durch diesen Aufbau bzw. Zusammenhang ist, wie bereits erwähnt, der erste Mantelabschnitt 12 über den Stirnwandabschnitt 17 mit dem zweiten Mantelabschnitt 15 verbunden.

Bevorzugt wird der Verbinderkörper 6 in einem Tiefziehverfahren hergestellt, wobei sämtliche Wandstärken der Mantelabschnitte des Verbinderkörpers 6 in etwa gleich groß sind.

Wie aus Fig. 3 ersichtlich, weist die Leitung 3 eine Innenwandfläche 28 und eine Außenwandfläche 29 auf, welche die Wandstärke 30 der Leitung 3 bilden. Beim Verpressen des Verbinderkörpers 6 mit der Leitung 3 liegt die Innenwandfläche 28 am ersten Mantelabschnitt 12 an und die Außenwandfläche 29 liegt am zweiten Mantelabschnitt 15 an.

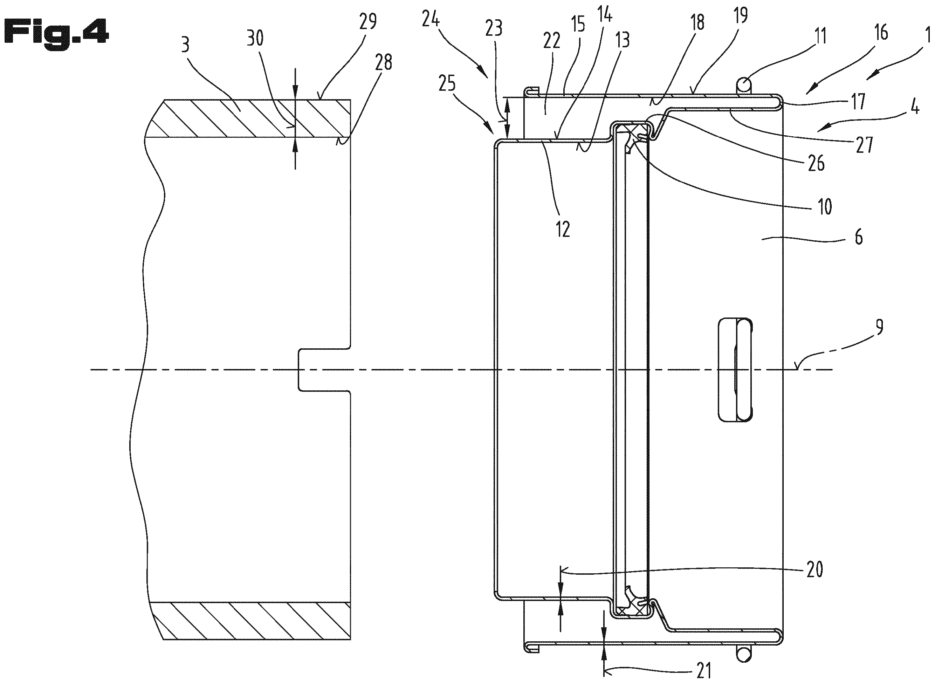

In der Fig. 4 ist eine weitere und gegebenenfalls für sich eigenständige Ausführungsform der Steckerbaugruppe 1 gezeigt, wobei wiederum für gleiche Teile gleiche Bezugszeichen bzw. Bauteilbezeichnungen wie in der vorangegangenen Fig. 3 verwendet werden. Um unnötige Wiederholungen zu vermeiden, wird auf die detaillierte Beschreibung in der vorangegangenen Fig. 3 hingewiesen bzw. Bezug genommen.

In dem Ausführungsbeispiel nach Fig. 4 ist die Leitung 3 aus einem elastischen Gummielement gebildet. Ein Dichtungselement 5 zum Abdichten zwischen Leitung 3 und Verbinderkörper 6 ist daher nicht zwingend notwendig, da eine derart ausgebildete Leitung 3 verformt werden kann und daher eine Abdichtwirkung direkt zwischen Leitung 3 und Verbinderkörper 6 geschaffen werden kann.

Ein Verfahren zum Zusammenbau der Steckerbaugruppe 1 wird im Folgenden anhand der Darstellung in den Figuren 3 und 4 beschrieben.

Bei dem Ausführungsbeispiel nach Fig. 3 wird in einem ersten Verfahrensschritt das Dichtungselement 5 in den Ringraum 22 eingesetzt. Ist das Dichtungselement 5 richtig im Verbinderkörper 6 positioniert, so kann nun in einem weiteren Verfahrensschritt die Leitung 3 in den Ringraum 22 eingeschoben werden.

Bei dem Ausführungsbeispiel nach Fig. 4 wird vorzugsweise direkt die Leitung 3 im Verbinderkörper 6 positioniert. Ein Positionieren des Dichtungselementes 5 kann entfallen.

Um die einzelnen Bauteile zueinander zu fixieren, ist bei beiden Ausführungsbeispielen vorgesehen, dass in einem weiteren Verfahrensschritt zur Herstellung der Steckerbaugruppe 1 der erste Mantelabschnitt 12 durch einen Pressvorgang plastisch verformt, daher verpresst wird, sodass eine formschlüssige Verbindung zwischen erstem Mantelabschnitt 12 und Leitung 3 hergestellt wird. Das Verpressverfahren an sich wird in weiterer Folge in der Figurenbeschreibung noch genauer erläutert.

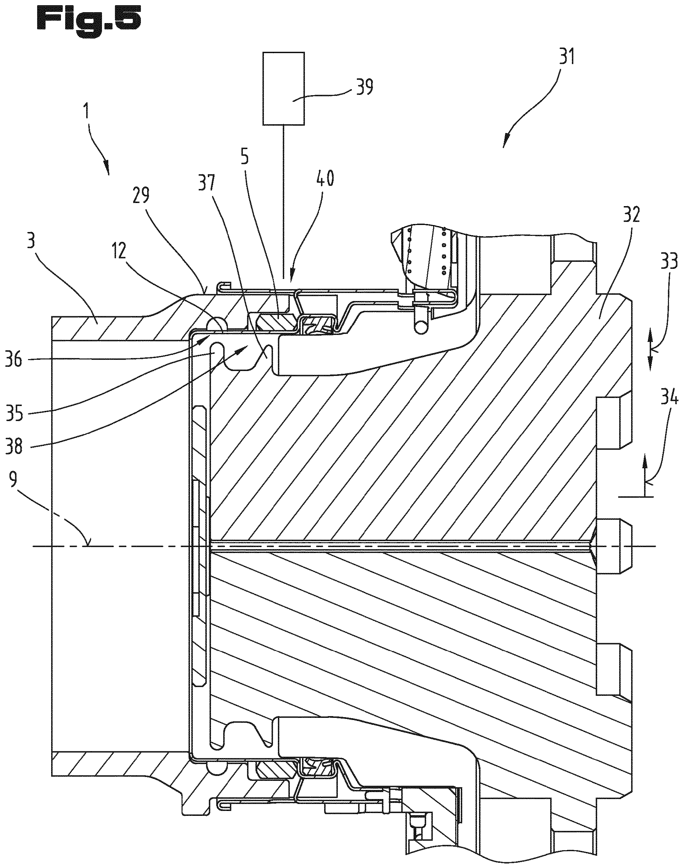

Fig. 5 zeigt eine Schnittdarstellung durch eine Pressmaschine 31 mit aufgespannter Steckerbaugruppe 1 entsprechend der Figuren 1 bis 4, wobei auch hier die Schnittführung entlang der zentralen Längsachse 9 gewählt ist. Bei dem weiteren Ausführungsbeispiel der Steckerbaugruppe 1 gemäß Fig. 4, bei welchem die elastische Leitung 3 verpresst wird, wird in weiterer Folge der Verpressvorgang nicht gesondert erklärt, da er analog zum Ausführungsbeispiel der Steckerbaugruppe 1 gemäß Fig. 3 abläuft.

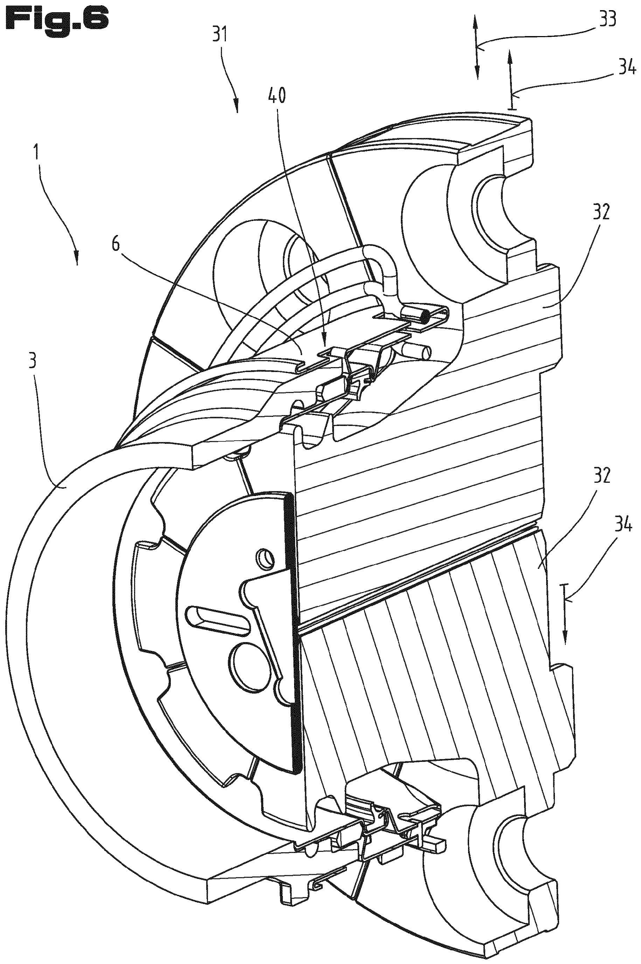

Fig. 6 zeigt eine perspektivische Ansicht der Schnittdarstellung entsprechend Fig. 5.

Wie in einer Zusammenschau aus Fig. 5 und Fig. 6 ersichtlich, umfasst die Pressmaschine 31 ein Presswerkzeug 32, mittels dem der erste Mantelabschnitt 12 des Verbinderkörpers 6 verformt werden kann und somit die Pressverbindung der Steckerbaugruppe 1 hergestellt werden kann. Das Presswerkzeug 32 verfährt während dem Verpressvorgang in Radialrichtung 33. Um eine dichte Verbindung zwischen Steckverbinder 4 und Leitung 3 herstellen zu können, ist ein gewisser Umformgrad des Steckverbinders 4 und somit ein gewisser Verfahrweg 34 notwendig, welchen das Presswerkzeug 32 verfahren muss.

Zum Verpressen einer starren Leitung 3 kann das Presswerkzeug 32 zwei Teilbereiche aufweisen. Ein erster Teilbereich 35 verformt während des Pressvorganges den ersten Mantelabschnitt 12 derart, dass eine erste Umformstelle 36 ausgebildet wird. Die erste Umformstelle 36 stellt hierbei eine formschlüssige Verbindung zwischen Leitung 3 und Verbinderkörper 6 her. Ein zweiter Teilbereich 37 des Presswerkzeuges 32 erzeugt eine zweite Umformstelle 38 durch welche das Dichtungselement 5 geklemmt wird.

Beim Verpressen einer elastischen Leitung 3 kann das Presswerkzeug 32 nur eine Pressnase aufweisen, welche während des Pressvorganges den ersten Mantelabschnitt 12 verformt.

Weiters kann eine Abstandsmesseinrichtung 39 vorgesehen sein, welche durch eine im zweiten Mantelabschnitt 15 angeordnete Fensteröffnung 40 hindurch die der Fensteröffnung 40 zugewandte Außenwandfläche 29 der Leitung 3 erfasst. Dadurch kann die Verformung des ersten Mantelabschnitts 12 in Abhängigkeit vom Ergebnis der mit der Abstandsmesseinrichtung 39 durchgeführten Erfassung der Außenwandfläche 29 der Leitung 3 durchgeführt werden.

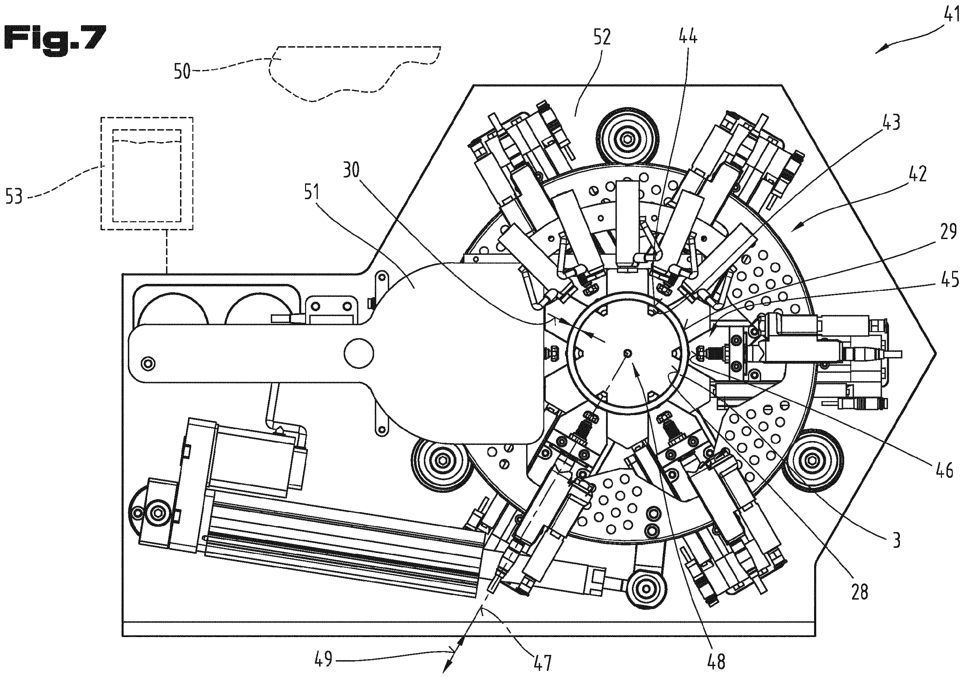

Fig. 7 zeigt eine Ansicht von vorne einer Messvorrichtung 41 zum Messen der Geometrie der Leitung 3. Als Messvorrichtung 41 wird die eigenständige Maschine gesehen, welche für das Vermessen der Leitung 3 geeignet ist.

Um die Leitung 3 in im Steckverbinder 4 verpressen zu können, kann es notwendig sein, dass vor dem Start des Verpressvorganges die Wandstärke 30 oder sonstige Geometriedaten der Leitung 3 ermittelt werden. Dadurch kann erreicht werden, dass die Pressung zwischen Steckverbinder 4 und Leitung 3 mediendicht ist und den Sicherheitsanforderungen entspricht.

Insbesondere soll es auch möglich sein, die Wandstärke 30 bei Leitungen 3 zu ermitteln, welche in Form eines elastischen Schlauches ausgebildet sind.

Um die Wandstärke 30 der Leitung 3 ermitteln zu können, umfasst die Messvorrichtung 41 eine Messtasteranordnung 42. Die Messtasteranordnung 42 umfasst innenliegende Messtaster 43 mit außen angeordneten Abtastflächen 44, welche zum Anlegen an die Innenwandfläche 28 der Leitung 3 ausgebildet sind. Die Abtastflächen 44 des innenliegenden Messtasters 43 sind vorzugsweise abgerundet ausgebildet, sodass der innenliegende Messtaster 43, insbesondere die Abtastfläche 44 nur an einer Berührlinie an der Innenwandfläche 28 aufliegt und nicht flächig an dieser aufliegt. Dies bringt den Vorteil mit sich, dass die Messung genauer werden kann und dass Leitung 3 mit verschieden großen Durchmessern vermessen werden können.

Jeder der innenliegenden Messtaster 43 korrespondiert mit einem außenliegenden Messtaster 45, wobei jeder außenliegende Messtaster 45 eine innen angeordnete Abtastfläche 46 zum Anliegen an die Außenwandfläche 29 der Leitung 3 aufweist.

Insbesondere kann vorgesehen sein, dass die Berührlinien zwischen innenliegendem Messtaster 43 und Innenwandfläche 28 sowie zwischen außenliegendem Messtaster 45 und Außenwandfläche 29 auf einer gemeinsamen Geraden 47 liegen, welche durch das Zentrum 48 der Messtasteranordnung 42 verläuft. Sowohl die innenliegenden Messtaster 43 als auch die außenliegenden Messtaster 45 können entlang der Geraden 47 und daher in Radialrichtung 6 verschoben werden.

Der Übersichtlichkeit halber ist in Fig. 7 ein Gehäuse 50 der Messvorrichtung 41 nur schematisch angedeutet und nicht näher dargestellt. Das Gehäuse 50 kann einen schützenden Mantel um das Innenleben der Messvorrichtung 41 bilden, sodass diese als eigenständig funktionierende Maschine in einem Produktionsbetrieb eingesetzt werden kann. Insbesondere ist es denkbar, dass das Gehäuse 50 als staubdicht geschlossenes Gehäuse ausgebildet ist, wobei an der Vorderseite des Gehäuses eine kreisrunde Öffnung ausgebildet ist, durch welche die Messtaster 43, 45 zugänglich sind.

Weiters kann vorgesehen sein, dass ein Schieber 51 ausgebildet ist, welcher zum Verschließen dieser kreisrunden Öffnung im Gehäuse 50 dient und somit im nicht verwendeten Zustand die Messvorrichtung 41, insbesondere deren innenliegenden Messbestandteile, von einer schmutzigen Industrieumgebung weitestgehend abgeschottet werden können. Wie aus Fig. 7 weiters ersichtlich, kann vorgesehen sein, dass eine Basisplatte 52 ausgebildet ist, an welcher die einzelnen Bauteile bzw. Bestandteile der Messvorrichtung 41 angeordnet bzw. befestigt sind.

Weiters kann vorgesehen sein, dass die Messvorrichtung 41 ein Anzeigemittel 53 umfasst, oder dass ein Anzeigemittel 53 an die Messvorrichtung 41 gekoppelt ist. Das Anzeigemittel 53 kann dazu ausgebildet sein, um optisch und/oder akustisch anzeigen zu können, ob die an der Messvorrichtung 41 vermessene Leitung 3 innerhalb der Toleranzgrenzen liegt.

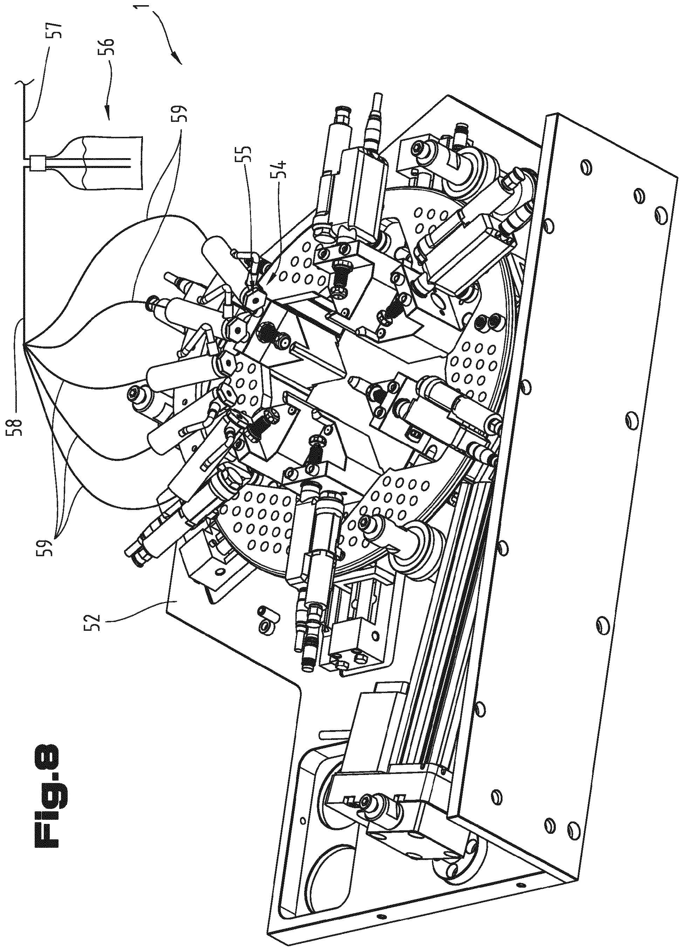

Fig. 8 zeigt die Messvorrichtung 41 in einer perspektivischen Ansicht von schräg unten, wobei wiederum für gleiche Teile gleiche Bezugszeichen bzw. Bauteilbezeichnungen wie in der vorangegangenen Fig. 7 verwendet werden. Um unnötige Wiederholungen zu vermeiden, wird auf die detaillierte Beschreibung in der vorangegangenen Fig. 7 hingewiesen bzw. Bezug genommen. In der Ansicht nach Fig. 8 ist der Schieber 51 zum Verdecken einer frontseitigen Öffnung im Gehäuse 50 nicht dargestellt.

Wie in Fig. 8 gut ersichtlich, kann vorgesehen sein, dass an der Messvorrichtung 41 eine Markiervorrichtung 54 ausgebildet ist, welche zum Markieren der Leitung 3 dient. Die Markiervorrichtung 54 kann insbesondere eingesetzt werden, um Leitungen 3 zu markieren, welche vermessen wurden und welche innerhalb der Toleranzgrenzen liegen und somit als Gutteil identifiziert wurden. Insbesondere kann vorgesehen sein, dass im weiteren Fertigungsprozess zur Herstellung einer Leitungsbaugruppe für den Ansaugstrang eines Kraftfahrzeugmotors bei jeder Leitung 3 vor dessen Verwendung abgefragt wird, ob dieses als Gutteil vermessen wurde.

Für die Markiervorrichtung 54 können verschiedene Arten von Markiermechanismen eingesetzt werden. Insbesondere ist es denkbar, dass eine oder mehrere Farbdüsen 55 ausgebildet sind, welche die Außenwandfläche 29 der Leitung 3 mit einem Farbstoff kennzeichnen. Der Farbstoff kann insbesondere eine Tinte sein, welche durch die Farbdüse 55 aufgespritzt wird.

Als vorteilhaft hat es sich erwiesen, wenn ein Farbstoff verwendet wird, welcher beispielsweise nur unter UV-Licht sichtbar ist. Somit kann erreicht werden, dass nach Fertigstellung der Leitungsbaugruppe die an der Leitung 3 angebrachten Markierungen bei normalen Lichtverhältnissen nicht sichtbar sind.

Alternativ zu der Ausführung der Markiervorrichtung 54 mit einer Farbdüse 55 ist es auch denkbar, dass die Markiervorrichtung 54 einen Laser umfasst, welcher Laser beispielsweise einen Strichcode an der Außenwandfläche 29 der Leitung 3 anbringen kann. Diese Markierung kann zum eindeutigen Identifizieren und Zuordnen der Leitung 3 zu den Vermessungsdaten der Geometrie herangezogen werden.

Insbesondere ist es möglich, dass bei einer Markierung, welche die Leitung 3 eindeutig zuordenbar kennzeichnet, die genauen Geometriedaten der Leitung 3 einer im Produktionsprozess nachfolgenden Pressmaschine übergeben werden, sodass ein anschließender Pressvorgang in Abhängigkeit vom Ergebnis der durchgeführten Messung durchgeführt werden kann.

Weiters ist es auch denkbar, dass die Messergebnisse abgespeichert werden, um im Produktlebenszyklus eine verbesserte Qualitätskontrolle zu ermöglichen.

In wieder einer anderen Ausführung ist es möglich, dass die Markiervorrichtung 54 beispielsweise einen Prägestempel umfasst und dass ein Gutteil mit einer Prägung versehen wird.

Weiters kann vorgesehen sein, dass die Messvorrichtung 41 einen Farbspeicher 56 umfasst. Der Farbspeicher 56 kann in Form eines Behältnisses, beispielsweise als Flasche ausgebildet sein. In diesem Behältnis ist die Farbe gespeichert.

Mittels einer Druckluftversorgungsleitung 57 kann der Farbspeicher 56 mit Innendruck beaufschlagt werden. Somit kann die Farbe in eine vom Farbspeicher 56 wegführende Hauptfarbleitung 58 gedrückt werden. Die Hauptfarbleitung 58 kann sich in mehrere Einzelfarbleitungen 59 verzweigen, welche jeweils mit einer Farbdüse 55 gekoppelt sind. In der Farbdüse 55 oder in den Einzelfarbleitungen 59 oder in der Hauptfarbleitung 58 kann ein Ventil 60, insbesondere ein Magnetventil angeordnet sein. Durch öffnen des Ventiles 60 kann die Farbe auf die Leitung 3 aufgebracht werden.

Wenn bei mehreren Farbdüsen 55 je Farbdüse 55 ein Ventil 60 vorgesehen ist, dann können verschiedene Muster auf die Leitung 3 aufgebracht werden. Dadurch können mehrere Informationen auf die Leitung 3 aufgebracht werden, wodurch eine einzelne Leitung eindeutig identifizierbar ist.

Ist nur ein Ventil 60 für mehrere Farbdüsen 55 vorgesehen, so können nur zwei Zustände, wie etwa in Ordnung / nicht in Ordnung an der Leitung 3 angezeigt werden.

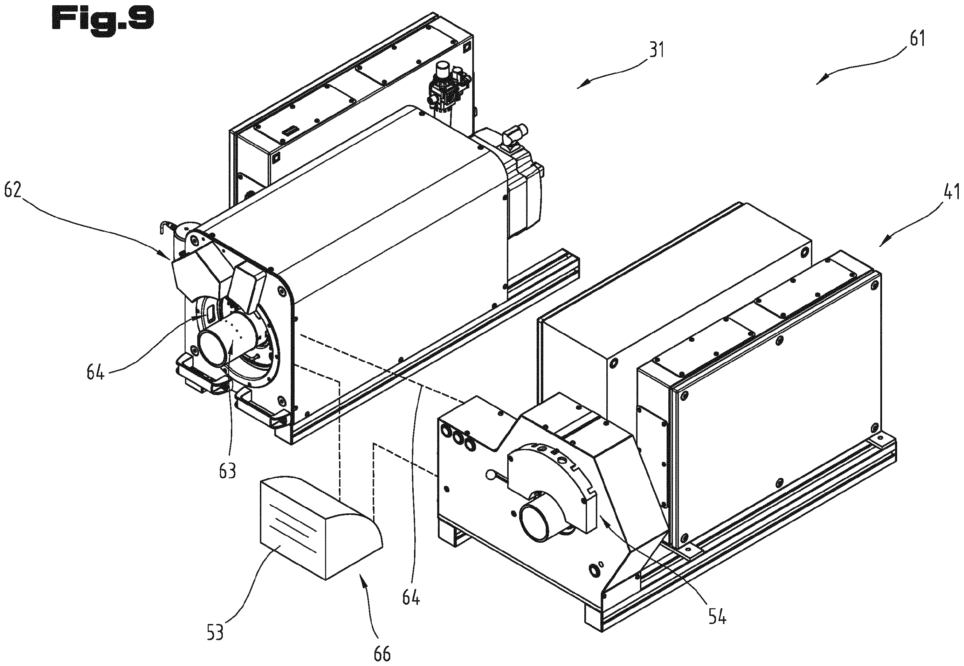

In der Fig. 9 ist eine Fertigungsanlage 61 in einer perspektivischen Ansicht dargestellt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Die Fertigungsanlage 61 umfasst die Messvorrichtung 41, welche zum Messen der Geometrie der zu verbindenden Leitung 3 ausgebildet ist. An der Messvorrichtung 41 ist die Markiervorrichtung 54 ausgebildet, welche zum Markieren der vermessenen Leitung 3 dient. Weiters umfasst die Fertigungsanlage 61 die Pressmaschine 31 zum Verpressen des Steckverbinders 4 mit der zuvor vermessenen Leitung 3. An der Pressmaschine 31 ist ein Erfassungsmittel 62 zur Erfassung einer an der Leitung 3 angebrachten Markierung 63 ausgebildet.

Die Fertigungsanlage 61 kann eingesetzt werden, um die Qualität der Verbindung der Leitung 3 mit dem Steckverbinder 4 zu erhöhen.

Insbesondere ist vorgesehen, dass die Leitung 3 in einem ersten Schritt an der Messvorrichtung 41 vermessen wird, um zu bestimmten ob die Leitung 3 innerhalb von vorbestimmten und festgelegten Toleranzgrenzen gefertigt wurde. Insbesondere werden die Geometriedaten der Leitung 3 erfasst, wie etwa die Wandstärke 30. Darüber hinaus ist es auch denkbar, dass ein Innendurchmesser der Innenwandfläche 28 oder ein Außendurchmesser der Außenwandfläche 29 der Leitung 3 erfasst wird.

Weiters ist vorgesehen, dass die Leitung 3, wenn diese innerhalb der vorgegebenen Toleranzgrenzen liegt, mittels der Markiervorrichtung 54 markiert wird, um diese damit als Gutteil zu kennzeichnen. Wenn die Leitung 3 als Gutteil gekennzeichnet und markiert wurde, wird diese aus der Messvorrichtung 41 herausgenommen und in den im Steckverbinder 4 ausgebildeten Ringraum 22 eingesteckt. Der Steckverbinder 4 ist hierbei an der Pressmaschine 31 vorpositioniert und in dieser aufgenommen.

In einem weiteren Verfahrensschritt wird durch das Erfassungsmittel 62 der Pressmaschine 31 überprüft, ob die eingelegte Leitung 3 vermessen und als Gutteil gekennzeichnet wurde.

Wenn die Leitung 3 positiv als Gutteil identifiziert wurde, so wird anschließend der Steckverbinder 4 mit der Leitung 3 verpresst. Nach erfolgreichem Abschluss des Verpressvorganges wird der Steckverbinder 4 mit der daran verpressten Leitung 3 zur Entnahme aus der Pressmaschine 31 freigegeben. Somit kann die fertiggestellte Baugruppe aus Steckverbinder 4 und Leitung 3 aus der Pressmaschine 31 entnommen und ein neuer noch nicht verpresster Steckverbinder 4 in der Pressmaschine 31 aufgenommen werden.

In einer ersten Ausführungsvariante ist es denkbar, dass die Markiervorrichtung 54 der Messvorrichtung 41 einen einzelnen Farbpunkt auf die Leitung 3 aufbringt und somit als Informationserhalt nur die beiden Zustände Gutteil oder nicht Gutteil an der Leitung 3 abgelesen werden können.

In einem weiteren Ausführungsbeispiel ist es denkbar, dass beispielsweise bei Verwendung von fünf Farbdüsen 55 die Anzahl von 32 verschiedenen Markierungsmustern an der Leitung 3 angebracht werden können. Somit kann durch die Zuordenbarkeit der Leitung auch abgefragt werden, ob tatsächlich die an der Messvorrichtung 41 zuvor vermessene und als Gutteil gekennzeichnete Leitung 3 zum Verpressen in die Pressmaschine 31 eingelegt wurde. Die 32 verschiedenen Markierungsmöglichkeiten können hierbei per Zufallsgenerator oder in einem bestimmten Ablauf variiert werden.

Wenn die Markiervorrichtung 54 derart ausgebildet ist, dass sie die Leitung 3 eindeutig identifizierbar markieren kann, ergibt sich als mögliche Erweiterung, dass zwischen Messvorrichtung 41 und Pressmaschine 31 eine Datenleitung 64 ausgebildet ist, welche die vermessenen Geometriedaten der Leitung 3 auf die Pressmaschine 31 überträgt. Dadurch ist es denkbar, dass der Pressvorgang in Abhängigkeit von der tatsächlichen und vermessenen Geometrie der Leitung 3 durchgeführt wird. Durch diese Maßnahme kann die Qualität der Verbindung zwischen Leitung 3 und Steckverbinder 4 verbessert werden.

Weiters ist es denkbar, dass in einem Verfahren, in welchem die exakte Geometrie der Leitung 3 berücksichtigt wird, die Toleranzgrenzen der Leitung 3 größer gewählt werden können als bei einem geometrieunabhängigen Verpressen. Somit kann die Anzahl der Ausschussteile vermindert werden.

Weiters ist es denkbar, dass sowohl die Messvorrichtung 41 als auch die Pressmaschine 31 von einer gemeinsamen Rechnereinheit 65 angesteuert werden. Dadurch kann erreicht werden, dass die beiden Maschinen miteinander interagieren und zusätzlich die Fertigungsanlage 61 in ihrer Komplexität vermindert wird, da für beide Maschinen nur eine Rechnereinheit 65 benötigt wird. Weiters ist es auch denkbar, dass die Rechnereinheit 65 und das Anzeigemittel 53 in einem gemeinsamen Gehäuse integriert sind.

Wie aus Fig. 9 ersichtlich, ist denkbar, dass eine Lichtquelle 66 in der Pressmaschine 31 angeordnet ist, durch welche Lichtquelle 66 die auf die Leitung 3 aufgebrachte Markierung 63 für das Erfassungsmittel 62 und/oder für den Benutzer sichtbar gemacht wird. Insbesondere kann es sich bei der Lichtquelle 66 um eine UV-Lampe oder um eine Schwarzlichtlampe handeln, durch welche eine spezielle Tinte sichtbar gemacht werden kann.

Wenn in der Messvorrichtung 41 eine Leitung 3 eingelegt wurde deren Geometrie außerhalb der vorbestimmten Toleranzgrenzen liegt, so wird dies dem Bediener optisch und/oder akustisch signalisiert und kann wahlweise nach einer Bestätigung des Benutzers die Leitung 3 zur Entnahme aus der Messvorrichtung 41 freigeben werden. Diese Leitung 3 wird hierbei nicht mit der Markierung 63 versehen und ist somit nicht zur weiteren Verpressung in der Pressmaschine 31 bestimmt. Wird diese Leitung 3 jedoch fälschlicherweise trotzdem in einen in der Pressmaschine 31 bereitgestellten Steckverbinder 4 eingesetzt, so ist vorgesehen, dass die Pressmaschine 31 bzw. die daran angeschlossene Peripherie dem Benutzer das Einsetzen einer falschen Leitung 3 signalisiert und der Pressvorgang nicht gestartet werden kann.

In einer weiteren Ausführungsvariante ist es auch denkbar, dass als Markiervorrichtung 54 ein Laser ausgebildet ist, welcher die Markierung 63 in Form eines Strichcodes oder Barcodes auf die Leitung 3 aufbringt. Dadurch ist es möglich die Leitung 3 eindeutig zuordenbar zu kennzeichnen, um somit auch im weiteren Produktlebenszyklus die Leitung 3 eindeutig identifizieren zu können. Darüber hinaus können zu jeder vermessenen Leitung 3 die Vermessungsdaten gespeichert werden, um somit zur weiteren, möglichen Fehleranalyse bzw. zur Verbesserung der Produktqualität die Vermessungsdaten im Produktlebenszyklus abzurufen.

Die Ausführungsbeispiele zeigen mögliche Ausführungsvarianten der Fertigungsanlage 61 wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2, 3, 4, 5, 6, 7, 8, 9 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Fertigungsanlage 61 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Steckerbaugruppe | 28 | Innenwandfläche |
| 2 | Gegensteckverbinder | 29 | Außenwandfläche |
| 3 | Leitung | 30 | Wandstärke |
| 4 | Steckverbinder | 31 | Pressmaschine |
| 5 | Dichtungselement | 32 | Presswerkzeug |
| 6 | Verbinderkörper | 33 | Radialrichtung |
| 7 | Fahrzeug | 34 | Verfahrweg |
| 8 | Turbolader | 35 | erster Teilbereich |
| 9 | Längsachse des Steckverbinders | 36 | erste Umformstelle |
| 10 | Steckerdichtung | 37 | zweiter Teilbereich |
| 11 | Federelement | 38 | zweite Umformstelle |
| 12 | erster Mantelabschnitt | 39 | Abstandsmesseinrichtung |
| 13 | innenliegende Mantelfläche | 40 | Fensteröffnung |
| 14 | außenliegende Mantelfläche | 41 | Messvorrichtung |
| 15 | zweiter Mantelabschnitt | 42 | Messtasteranordnung |
| 16 | erster Endabschnitt Steckverbinder | 43 | innenliegender Messtaster |
| 17 | Stirnwandabschnitt | 44 | Abtastfläche innenliegender Messtaster |
| 18 | innenliegende Mantelfläche | | |
| 19 | außenliegende Mantelfläche | 45 | außenliegender Messtaster |
| 20 | Wandstärke erster Mantelabschnitt | 46 | Abtastfläche außenliegender Messtaster |
| 21 | Wandstärke zweiter Mantelabschnitt | | |
| | | 47 | Gerade |
| 22 | Ringraum | 48 | Zentrum |
| 23 | Ringraumspalt | 49 | Radialrichtung |
| 24 | zweiter Endabschnitt Steckverbinder | 50 | Gehäuse |
| | | 51 | Schieber |
| 25 | Rohraufhahmeseite | 52 | Basisplatte |
| 26 | Dichtungsaufnahme Steckverbinder | 53 | Anzeigemittel |
| | | 54 | Markiervorrichtung |
| 27 | Dritter Mantelabschnitt | 55 | Farbdüse |
| 56 | Farbspeicher | | |
| 57 | Druckluftversorgungsleitung | | |
| 58 | Hauptfarbleitung | | |
| 59 | Einzelfarbleitung | | |
| 60 | Ventil | | |
| 61 | Fertigungsanlage | | |
| 62 | Erfassungsmittel | | |
| 63 | Markierung | | |
| 64 | Datenleitung | | |
| 65 | Rechnereinheit | | |
| 66 | Lichtquelle | | |

## Patentansprüche

1. Fertigungsanlage (61) zum Verbinden einer Leitung (3) für flüssige oder gasförmige Medien mit einem Steckverbinder (4), die Fertigungsanlage (61) umfassend:
- eine Messvorrichtung (41) zum Messen der Geometrie der zu verbindenden Leitung (3), wobei an der Messvorrichtung (41) eine Markiervorrichtung (54) zum Markieren der vermessenen Leitung (3) ausgebildet ist;
- eine Pressmaschine (31) zum Verpressen des Steckverbinders (4) mit der vermessenen Leitung (3), wobei an der Pressmaschine (31) ein Erfassungsmittel (62) zur Erfassung einer an der Leitung (3) angebrachten Markierung ausgebildet ist.

2. Fertigungsanlage nach Anspruch 1, **dadurch gekennzeichnet, dass** die Markiervorrichtung (54) der Messvorrichtung (41) zumindest eine Farbdüse (55) zum Aufbringen eines Farbmittels auf eine Außenwandfläche (29) der Leitung (3) umfasst.

3. Fertigungsanlage nach Anspruch 2, **dadurch gekennzeichnet, dass** die Markiervorrichtung (54) fünf nebeneinander angeordnete Farbdüsen (55) zum Aufbringen eines Farbmittels, beispielsweise einer UV-Tinte, auf eine Außenwandfläche (29) der Leitung (3) umfasst.

4. Fertigungsanlage nach Anspruch 2 oder 3, **dadurch gekennzeichnet, dass** ein Farbspeicher (56) in Form eines Behältnisses ausgebildet ist, welcher Farbspeicher (56) mit Druckluft beaufschlagbar ist und dass je Farbdüse (55) ein Ventil (60), insbesondere ein Magnetventil angeordnet ist.

5. Fertigungsanlage nach einem der vorhergehenden Ansprüche, **dadurch gekennzeichnet, dass** das Erfassungsmittel (62) der Pressmaschine (31) als optisches Erfassungsmittel (62), insbesondere als Kamerasystem ausgebildet ist.

6. Fertigungsanlage nach einem der vorhergehenden Ansprüche, **dadurch gekennzeichnet, dass** an der Pressmaschine (31) eine Lichtquelle (66) angeordnet ist, welche zum Abstrahlen von ultraviolettem Licht ausgebildet ist.

7. Fertigungsanlage nach einem der vorhergehenden Ansprüche, **dadurch gekennzeichnet, dass** ein optisches Anzeigemittel (53), beispielsweise ein Bildschirm, ausgebildet ist, welcher mit der Messvorrichtung (41) und/oder mit der Pressmaschine (31) verbunden ist.

8. Fertigungsanlage nach einem der vorhergehenden Ansprüche, **dadurch gekennzeichnet, dass** die Messvorrichtung (41) mit der Pressmaschine (31) mittels einer Datenleitung (64) verbunden ist.

9. Fertigungsanlage nach einem der vorhergehenden Ansprüche, **dadurch gekennzeichnet, dass** die Messvorrichtung (41) und die Pressmaschine (31) durch eine gemeinsame Rechnereinheit (65), etwa einem Industriecomputer, angesteuert werden.

10. Verfahren zum Verbinden einer Leitung (3) für flüssige oder gasförmige Medien mit einem Steckverbinder (4), insbesondere unter Verwendung einer Fertigungsanlage (61) nach einem der vorhergehenden Ansprüche, **dadurch gekennzeichnet, dass** das Verfahren folgende Verfahrensschritte umfasst:
- Vermessen der Geometrie der zu verbindenden Leitung (3) an einer Messvorrichtung (41);
- Markieren der zu verbindenden Leitung (3) mittels einer Markiervorrichtung (54), wenn die Geometrie der zu verbindenden Leitung (3) innerhalb vorgegebener Toleranzgrenzen liegt;
- Einlegen des Steckverbinders (4) in eine Pressmaschine (31);
- Einstecken der Leitung (3) in einen im Steckverbinder (4) ausgebildeten Ringraum (22);
- Überprüfen ob die eingelegte Leitung (3) vermessen und als Gutteil markiert wurde mittels einem Erfassungsmittel (62), welches an der Pressmaschine (31) angeordnet ist;
- Verpressen des Steckverbinders (4) mit der Leitung (3), wenn die Leitung (3) als Gutteil identifiziert wurde;
- Freigeben des mit der Leitung (3) verpressten Steckverbinders (4).

11. Verfahren nach Anspruch 10, **dadurch gekennzeichnet, dass** durch die Markiervorrichtung (54) zumindest ein Farbpunkt auf eine Außenwandfläche (29) der Leitung (3) aufgebracht wird und dass von dem Erfassungsmittel (62) erfasst wird, ob der Farbpunkt auf der Leitung (3) vorhanden ist.

12. Verfahren nach Anspruch 10, **dadurch gekennzeichnet, dass** durch die Markiervorrichtung (54) ein Muster von Farbpunkten auf die Außenwandfläche (29) der Leitung (3) aufgebracht wird und dass von der Pressmaschine (31) mittels dem Erfassungsmittel (62) das Muster von Farbpunkten abgelesen wird, wobei ermittelt wird, ob die zuletzt vermessene Leitung (3) in die Pressmaschine (31) eingelegt ist.

13. Verfahren nach einem der vorhergehenden Ansprüche, **dadurch gekennzeichnet, dass** die von der Messvorrichtung (41) erfassten Geometriedaten der Leitung (3) an die Pressmaschine (31) übertragen werden und der Pressvorgang in Abhängigkeit von den erfassten Geometriedaten der Leitung (3) durchgeführt wird.

14. Verfahren nach einem der vorhergehenden Ansprüche, **dadurch gekennzeichnet, dass** in der Messvorrichtung (41) eine Wandstärke (30) der Leitung (3) erfasst wird.

15. Verfahren nach einem der vorhergehenden Ansprüche, **dadurch gekennzeichnet, dass** die in der Messvorrichtung (41) ermittelten Messwerte der Leitung (3) mit einem vorgegebenen bzw. vorgebbaren Toleranzbereich abgeglichen werden und dass bei Überschreiten der Toleranzgrenzen dies dem Benutzer signalisiert wird und die Leitung (3) ohne markiert zu werden von der Messvorrichtung (41) zur Herausnahme freigegeben wird.

16. Verfahren nach einem der vorhergehenden Ansprüche, **dadurch gekennzeichnet, dass** eine Abstandsmesseinrichtung (39) durch eine im zweiten Mantelabschnitt (15) angeordnete Fensteröffnung (40) hindurch die der Fensteröffnung (40) zugewandte Außenwandfläche (29) der Leitung (3) erfasst.

## Claims

1. A production assembly (61) for connecting a line (3) for liquid or gaseous media to a plug connector (4), the production assembly (61) comprising:
- a measuring device (41) for measuring the geometry of the lines (3) to be connected, wherein a marking device (54) for marking the measured line (3) is formed on the measuring device (41);
- a pressing machine (31) for pressing the plug connector (4) with the measured line (3), wherein a detection means (62) for detecting a marking placed on the line (3) is formed on the pressing machine (31).

2. The production assembly according to claim 1, **characterized in that** the marking device (54) of the measuring device (41) comprises at least one colorant nozzle (55) for applying a colorant onto an outer wall surface (29) of the line (3).

3. The production assembly according to claim 2, **characterized in that** the marking device (54) comprises five colorant nozzles (55) arranged next to one another for applying a colorant, such as a UV ink, onto an outer wall surface (29) of the line (3).

4. The production assembly according to claim 2 or 3, **characterized in that** a colorant reservoir (56) in the form of a container is formed, which colorant reservoir (56) can be acted upon by compressed air and that a valve (60), in particular a magnetic valve, is arranged for each colorant nozzle (55).

5. The production assembly according to one of the preceding claims, **characterized in that** the detection means (62) of the pressing machine (31) is designed as an optical detection means (62), in particular as a camera system.

6. The production assembly according to one of the preceding claims, **characterized in that** a light source (66), which is designed for emitting ultraviolet light, is arranged on the pressing machine (31).

7. The production assembly according to one of the preceding claims, **characterized in that** an optical display means (53), for example a screen, is formed, which is connected to the measuring device (41) and/or to the pressing machine (31).

8. The production plant according to one of the preceding claims, **characterized in that** the measuring device (41) is connected to the pressing machine (31) by means of a data line (64).

9. The production assembly according to one of the preceding claims, **characterized in that** the measuring device (41) and the pressing machine (31) are controlled by a common computer unit (65), such as an industrial computer.

10. A method for connecting a line (3) for liquid or gaseous media to a plug connector (4), in particular using a production assembly (61) according to one of the preceding claims, **characterized in that** the method comprises the following method steps:
- measuring the geometry of the line (3) to be connected at a measuring device (41);
- marking the line (3) to be connected by means of a marking device (54) if the geometry of the line (3) to be connected lies within predefined tolerance limits;
- placing the plug connector (4) in a pressing machine (31);
- inserting the line (3) into an annulus (22) formed in the plug connector (4);
- checking whether the inserted line (3) was measured and marked as a good part by means of a detection means (62), which is arranged on the pressing machine (31);
- pressing the plug connector (4) with the line (3) if the line (3) was identified as a good part;
- releasing the plug connector (4) pressed with the line (3).

11. The method according to claim 10, **characterized in that** at least one color dot is applied onto an outer wall surface (29) of the line (3) by means of the marking device (54) and that the detection means (62) detects whether the color dot is present on the line (3).

12. The method according to claim 10, **characterized in that** a pattern of color dots is applied onto the outer wall surface (29) of the line (3) by means of the marking device (54) and that the pattern of color dots is read by the pressing machine (31) by means of the detection means (62), wherein it is determined whether the last measured line (3) is inserted into the pressing machine (31).

13. The method according to one of the preceding claims, **characterized in that** the geometry data of the line (3) detected by the measuring device (41) is transmitted to the pressing machine (31) and the pressing operation is carried out depending on the detected geometry data of the line (3).

14. The method according to one of the preceding claims, **characterized in that** a wall thickness (30) of the line (3) is detected in the measuring device (41).

15. The method according to one of the preceding claims, **characterized in that** the measuring values of the line (3) determined in the measuring device (41) are compared with a predefined and/or predefinable tolerance range and that when the tolerance limits are exceeded, this is signaled to the user and the line (3) is released for removal by the measuring device (41) without being marked.

16. The method according to one of the preceding claims, **characterized in that** a distance measuring device (39), through a window opening (40) arranged in the second casing section (15), detects the outer wall surface (29) of the line (3) facing the window opening (40).

## Revendications

1. Installation de fabrication (61) pour la liaison d'une conduite (3) pour des fluides liquides ou gazeux avec un connecteur enfichable (4), l'installation de fabrication (61) comprenant :
- un dispositif de mesure (41) pour la mesure de la géométrie de la conduite (3) à relier, moyennant quoi, sur le dispositif de mesure (41) est prévu un dispositif de marquage (54) pour le marquage de la conduite (3) mesurée ;
- une machine de pressage (31) pour le pressage du connecteur enfichable (4) avec la conduite (3) mesurée, moyennant quoi, sur la machine de pressage (31), est prévu un moyen de détection (62) pour la détection d'un marquage réalisé sur la conduite (3).

2. Installation de fabrication selon la revendication 1, **caractérisée en ce que** le dispositif de marquage (54) du dispositif de mesure (41) comprend au moins une buse de couleur (55) pour l'application d'un colorant sur une surface de paroi externe (29) de la conduite (3).

3. Installation de fabrication selon la revendication 2, **caractérisée en ce que** le dispositif de marquage (54) comprend cinq buses de couleur (55) juxtaposées pour l'application d'un colorant, par exemple une encre UV, sur une surface de paroi externe (29) de la conduite (3).

4. Installation de fabrication selon la revendication 2 ou 3, **caractérisée en ce qu'**un réservoir de couleur (56) est conçu sous la forme d'un récipient, ce réservoir de couleur (56) pouvant être alimenté en air comprimé, et **en ce que** une soupape (60), plus particulièrement, une soupape magnétique, est prévue au niveau de chaque buse de couleur (55).

5. Installation de fabrication selon l'une des revendications précédentes, **caractérisée en ce que** le moyen de détection (62) de la machine de pressage (31) est conçu comme un moyen de détection optique (62), plus particulièrement un système de caméra.

6. Installation de fabrication selon l'une des revendications précédentes, **caractérisée en ce que**, sur la machine de pressage (31) est disposée une source de lumière (66) qui est conçue pour l'émission d'une lumière ultraviolette.

7. Installation de fabrication selon l'une des revendications précédentes, **caractérisée en ce qu'**un moyen d'affichage optique (53), par exemple un écran, est prévu, qui est relié avec le dispositif de mesure (41) et/ou avec la machine de pressage (31).

8. Installation de fabrication selon l'une des revendications précédentes, **caractérisée en ce que** le dispositif de mesure (41) est relié avec la machine de pressage (31) par l'intermédiaire d'une ligne de données (64).

9. Installation de fabrication selon l'une des revendications précédentes, **caractérisée en ce que** le dispositif de mesure (41) et la machine de pressage (31) sont contrôlés par un ordinateur (65) commun, par exemple un ordinateur industriel.

10. Procédé de liaison d'une conduite (3) pour des fluides liquides ou gazeux avec un connecteur enfichable (4), plus particulièrement à l'aide d'une installation de fabrication (61) selon l'une des revendications précédentes, **caractérisé en ce que** ce procédé comprend les étapes suivantes :
- mesure de la géométrie de la conduite (3) à relier au niveau d'un dispositif de mesure (41) ;
- marquage de la conduite (3) à relier au moyen d'un dispositif de marquage (54), lorsque la géométrie de la conduite (3) à relier se trouve dans des limites de tolérances prédéterminées ;
- introduction du connecteur enfichable (4) dans une machine de pressage (31) ;
- introduction de la conduite (3) dans un espace annulaire (22) formé dans le connecteur enfichable (4) ;
- vérification si la conduite (3) introduite a été mesurée et marquée comme pièce bonne à l'aide d'un moyen de détection (62), qui est disposé sur la machine de pressage (31) ;
- pressage du connecteur enfichable (4) avec la conduite (3) lorsque la conduite (3) a été identifiée comme une bonne pièce ;
- libération du connecteur enfichable (4) pressé avec la conduite (3).

11. Procédé selon la revendication 10, **caractérisé en ce que** le dispositif de marquage (54) permet d'appliquer au moins un point de couleur sur une surface de paroi externe (29) de la conduite (3) et **en ce que** le moyen de détection (62) détecte si le point de couleur est présent sur la conduite (3).

12. Procédé selon la revendication 10, **caractérisé en ce que** le dispositif de marquage (54) permet d'appliquer une trame de points de couleur sur la surface de paroi externe (29) de la conduite (3) et **en ce que** la machine de pressage (31) lit, à l'aide du moyen de détection (62), la trame de points de couleur, moyennant quoi il est déterminé si la conduite (3) mesurée en dernier est introduite dans la machine de pressage (31).

13. Procédé selon l'une des revendications précédentes, **caractérisé en ce que** les données géométriques de la conduite (3), saisies par le dispositif de mesure (41), sont transmises à la machine de pressage (31) et le processus de pressage est effectué en fonction des données géométriques saisies de la conduite (3).

14. Procédé selon l'une des revendications précédentes, **caractérisé en ce que**, dans le dispositif de mesure (41) est mesurée une épaisseur de paroi (30) de la conduite (3).

15. Procédé selon l'une des revendications précédentes, **caractérisé en ce que** les valeurs de mesure de la conduite (3), déterminées dans le dispositif de mesure (41), sont comparées avec un domaine de tolérance prédéterminé ou pouvant être prédéterminé et **en ce que**, lors du dépassement des limites de tolérance, cela est signalé à l'utilisateur et la conduite (3) est libérée afin d'être retirée du dispositif de mesure (41) sans être marquée.

16. Procédé selon l'une des revendications précédentes, **caractérisé en ce qu'**un dispositif de mesure de distance (39) mesure, à travers une ouverture de fenêtre (40) disposé dans la deuxième portion d'enveloppe (15), la surface de paroi externe (29), orientée vers l'ouverture de fenêtre (40), de la conduite (3).
